# EUROPEAN PATENT SPECIFICATION

(11) **EP 0 653 315 B1**
(45) Date of publication and mention of the grant of the patent: **29.01.1997**
(21) Application number: 94203257.4
(22) Date of filing: 08.11.1994
(51) Int. Cl.: B60B 27/00

(54) **Hub assembly with bearing unit and homokinetic coupling**
Radnabeeinrichtung mit Lagervorrichtung und homokinetischer Kupplung
Unité de moyeu de roue avec ensemble de palier et accouplement homocynétique

(30) Priority: 12.11.1993 NL 9301962
(43) Date of publication of application: 17.05.1995
(73) Proprietor: SKF Industrial Trading & Development Co, B.V., NL-3439 MT Nieuwegein (NL)
(72) Inventor: Van Dalen, Willem Cornelis, NL-4254 BJ Sleeuwijk (NL); Holsnijders, Jozef Johannes, NL-4142 EN Leerdam (NL); Maas, Douwe Alexander, NL-3435 VH Nieuwegein (NL); Wilson, Patricia, NL-3438 AC Nieuwegein (NL); Scheers, Gert-Jan, NL-6851 AZ Huissen (NL); Korenhof, Abraham, NL-3972 BA Driebergeb (NL); Kapaan, Hendrikus Jan, NL-3435 DM Nieuwegein (NL)
(74) Representative: de Bruijn, Leendert C.

(56) References cited:
- FR-A- 2 482 015
- FR-A- 2 569 145
- FR-A- 2 605 557
- GB-A- 2 134 992
- GB-A- 2 191 267

## Description

The invention relates to a hub assembly for a driven wheel of a vehicle, which hub comprises a bearing unit, provided with a rotary inner ball race and a homokinetic coupling cooperating with the inner ball race by means of a separate connection piece and pretensioning means in engagement with said connection piece for holding the bearing unit and coupling pressed against one another.

Such a hub assembly is known from GB-A-2191267. The inner ball race of said hub assembly is accommodated on a hub member, which by means of splines cooperates with the coupling. Fixing by means of splines has the disadvantage that it is expensive, and that the hub assembly becomes rather heavy.

The aim of the invention is, therefore, to provide a hub assembly which does not have these disadvantages. This aim is achieved in that the connection piece comprises a connecting bush on which the pretensioning means engage, which connection bush interacts with inner ball race and coupling by means of non-circular shapes.

The connection piece and the inner surfaces of inner ball race and coupling can be of a simple shape, that is to say without splines, so that they can be manufactured inexpensively, for example by means of pressing.

The connection piece can have an outwards-facing flange which is in contact with a contact face of the coupling which faces away from the bearing unit, pretensioning means which interact with the connection piece being provided to hold bearing unit and coupling pressed against one another via said flange under axial pretension. The maintenance of a certain pretension in the fixing between inner ball race and coupling is important for play-free transmission of differing stresses.

In this context it is advantageous if, in the axial direction, inner ball race and coupling are held clamped against one another by means of the connection piece and a bolt which bears against the latter.

Preferably, the head of the bolt is in contact with a contact face of the bearing unit which faces away from the coupling, and the shank of the bolt is screwed into a nut which interacts with the connection piece.

According to a first possibility, the nut is integral with the connection piece; according to a second possibility, the nut is accommodated in a connecting bush and bears against an inwards-facing flange of the connecting bush.

In order to obtain the requisite flexibility in the connection, a compression body of resilient material, such as rubber, can be provided between the nut and the inwards-facing flange of the connecting bush.

The contact face with which the head of the bolt is in contact can, according to a first variant, be formed by a washer which bears against the shoulder in the bore in the inner race in which the bolt is accommodated.

According to a further variant, the head of the bolt can be in contact with a wheel bush which bears against the inner ball race. With a construction of this type, the wheel bush can advantageously be of a design such that the desired flexibility in the bolt connection is obtained. Said bolt connection must, namely, not be too rigid in view of the fluctuating stresses to which the hub of a vehicle is exposed.

In another embodiment, the hub can have a wheel bush which has a deepened section which fits in the bore and with which the bolt head is in contact. With a deepened inner race of this type, the bolt has a relatively short length. An embodiment of this type is especially attractive because of the lower costs. As the bolt is a high-grade structural component which is manufactured from special steel and requires a special surface treatment in view of the fluctuating stresses, the cost price can be reduced by making the bolt shorter. It is true that a shorter bolt is more rigid, but the desired flexibility of the connection can still be obtained by means of the wheel bush.

In this regard a hub in which the bore has a conically widening section and the deepened section of the wheel bush is of corresponding conical design is particularly advantageous.

In particular, the hub can contain a bearing unit having two rows of balls, the inner race being composed of two sections which are likewise held pressed against one another under axial pretension.

The invention will now be explained in more detail with reference to a few examples shown in the figures.

Fig. 1 shows, in cross-section, an example of a first embodiment of the hub assembly according to the invention.

Fig. 2 shows the section along the line II-II in Fig. 1.

Fig. 3 shows a sectional view of part of a second embodiment.

Fig. 4 shows a sectional view of part of a third embodiment.

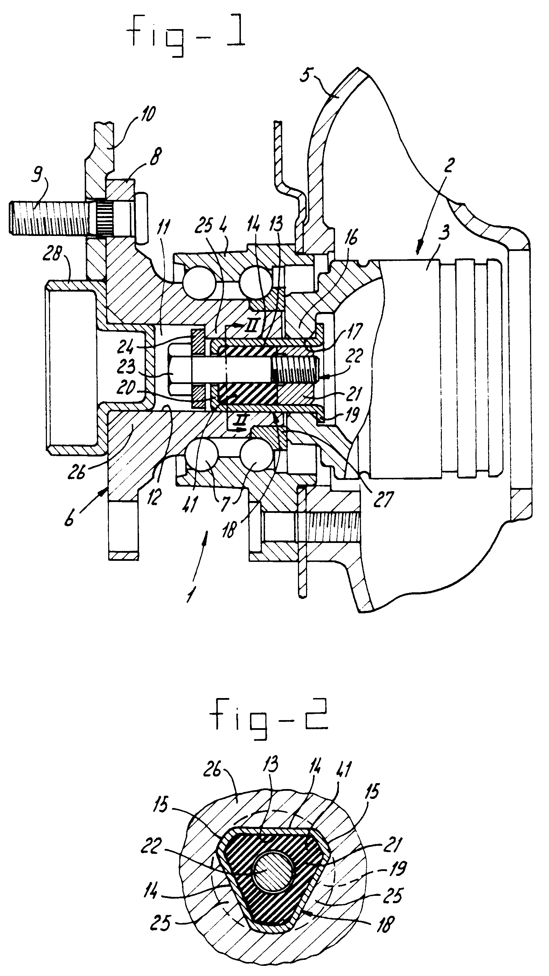

The illustrative embodiment shown in Fig. 1 comprises a bearing unit, which is indicated in its entirety by 1, and a homokinetic coupling 2. Part of the casing 3 of said homokinetic coupling 2 is shown in section.

The bearing unit 1 comprises a fixed outer ball race 4, which can be fixed to the suspension 5. In addition there is a rotary inner ball race 6, which is fixed to the casing 3 of the homokinetic coupling 2 in a manner which is to be described in more detail.

Two rows of balls 7 are arranged in a known manner between the inner ball race and the outer ball race 4. Fixing studs 9, on which a wheel can be fixed, are provided on the integral flange 8 of the inner ball race 6. The brake disc 10, part of which is shown, is also fixed on said studs.

The inner ball race has an inner chamber, which is indicated in its entirety by 11, the outermost section 12 of which chamber is of cylindrical construction. The innermost section 13 is of non-circular shape. Said section 13 is delimited by three flat surfaces 14, which are mutually connected by partially circular surfaces 15. In this way an approximately triangular inner chamber 13 is obtained.

The casing 3 of the homokinetic coupling has a flange 16 having a correspondingly shaped inner opening 17. A connecting bush 18 fits tightly both in said opening 17 of the flange 16 and in the section 13 of the hollow chamber 11 in the inner ball race 6. Said connecting bush 18 has an outwards-facing flange 19 at its end facing towards the homokinetic coupling 2 and has an inwards-facing flange 20 at its other end. The connecting bush 18 hooks behind the flange 16 of the homokinetic coupling 2 by means of the flange 19.

A nut 21, into which the bolt 22 is screwed, is accommodated in the bush 18. In addition, a flexible compression body 41, for example made of rubber, is located between the inwards-facing flange 20 and the nut. The head 23 of the bolt 22 is in contact with thrust washer 24, which, in turn, bears against the shoulder 25 which is located at the position of the surfaces 14.

When the bolt 22 is screwed into the nut 21 the flange 16 of the casing 3 is pulled firmly against the inner race of the bearing unit and the compression body is compressed.

As shown in Fig. 1, the inner race comprises a first inner race section 26 and a second inner race section 27. One row of balls 7 is accommodated in the first inner race section 26 and the second row of balls 7 is accommodated in the second inner race section 27. The flange 16 of the casing 3 is now in contact with the second inner race section 27. When the bolt 22 is tightened the inner race section 27 is pressed, under pretension, against the first inner race section 26 via the flange 16. During this operation the two rows of balls 7 are also placed under pretension, which is known per se.

There must be a certain degree of elasticity in the hub assembly in order to be able to maintain the pretension in the bolt 22 under fluctuating stresses. In the present example a relatively short bolt is used, the elasticity of which is in itself not sufficient. The correct level of elasticity can nevertheless be achieved by means of compression body 41, which allows a certain degree of elastic deformation.

The inner hollow chamber 11 of the inner ball race 6 is closed off by means of the wheel bush 28.

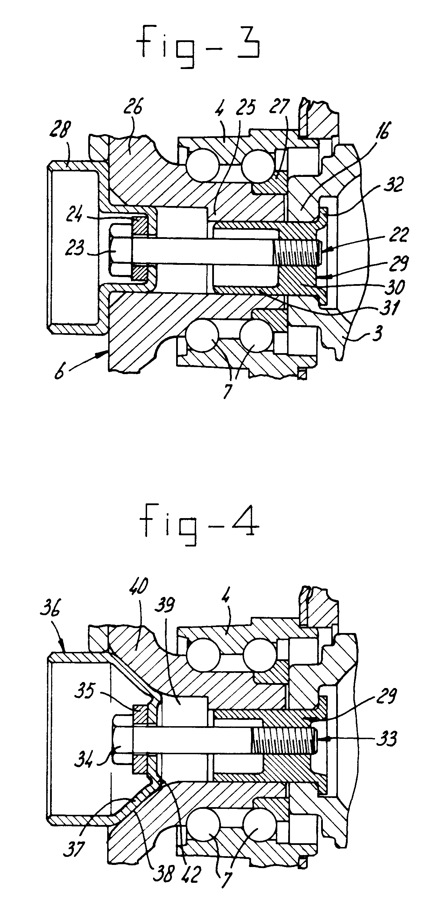

In the illustrative embodiment in Fig. 3 a connecting bush 29, which is in one piece, is used between the inner ball race 6 and the flange 16 of the casing 3. On the outside said connecting bush has the same shape as the connecting bush according to Figs 1 and 2. However, the nut component 30 is now constructed as one piece with the wall 31 and the flange 32. With this construction as well, the bolt head 23 bears against the shoulder 25 by means of the wheel bush (28) and the thrust washer 24 which allows a certain degree of elastic deformation.

The embodiment according to Fig. 4 once again has a connecting bush 29 of the type used in the embodiment in Fig. 3. However, in the embodiment in Fig. 4 a longer bolt 33 is used, the head 34 of which bears against the wheel bush 36 via washer 35. Said wheel bush 36 has a conical section 37, which is supported in section 38, which is of corresponding conical construction, of the inner hollow chamber 39 of the inner ball race 40. The conical section 37 merges, via a shaped collar 42, into the bearing flange for the washer 35. This shape of the wheel bush 36, and also the bolt 33, provide the connection between the bearing unit and the homokinetic coupling with the desired elasticity.

## Claims

1. Hub assembly for a driven wheel of a vehicle, which hub comprises a bearing unit (1), provided with a rotary inner ball race (6) and a homokinetic coupling (2) cooperating with the inner ball race (6) by means of a separate connection piece (18) and pretensioning means (22, 24, 41) in engagement with said connection piece (18) for holding the bearing unit (1) and coupling (2) pressed against one another characterized in that the connection comprises a connecting bush (18, 29) on which the pretensioning means (22, 24, 41) engage, which connection bush (18, 29) interacts with inner ball race (6) and coupling (2) by means of non-circular shapes.

2. Hub according to Claim 1 wherein the connection has an outwards-facing flange (19,32) which is in contact with a contact face of the coupling (2) which faces away from the bearing unit (1) and wherein pretensioning means which interact with the connection bush (18, 29) are provided to hold bearing unit (1) and coupling (2) pressed against one another via said flange (19, 32) under axial pretension.

3. Hub according to Claim 1 or 2, wherein, in the axial direction, inner ball race (6) and coupling (2) are held clamped against one another by means of the connection bush (18, 29) and a bolt (22) which bears against the latter.

4. Hub according to Claim 1, 2, or 3, wherein the head (23) of the bolt (22) is in contact with a contact face of the bearing unit (1) which faces away from the coupling (2), and the shank of the bolt (22) is screwed into a nut which interacts with the connection bush (18, 29).

5. Hub according to Claim 4, wherein the nut (30) is integral with the connection bush (29).

6. Hub according to Claim 4, wherein the nut (21) is accommodated in the connecting bush (18) and bears against an inwards-facing flanges (20) of the connecting bush(18).

7. Hub according to Claim 6, wherein a compression body (41) of resilient material, such as rubber, is provided between the nut (21) and the inwards-facing flange (20) of the connecting bush (18).

8. Hub according to Claim 4, 5, 6 or 7, wherein the head (23) of the bolt (22) is in contact with a washer (24) which bears against a shoulder in the bore in the inner race (6) in which the bolt (22) is accommodated.

9. Hub according to Claim 4, 5, 6 or 7, wherein the head (23) of the bolt (22) is in contact with a wheel bush (28, 36) which bears against the inner ball race (6).

10. Hub according to Claim 9, wherein the wheel bush (28, 36) has a deepened section (37) which fits in the bore and with which the bolt head is in contact.

11. Hub according to Claim 10, wherein the bore has a conically widening section and the deepened section (37) of the wheel bush (36) is of corresponding conical design.

12. Hub according to one of Claims 2 to 11, wherein the bearing unit (1) is a ball bearing having two rows of balls (7) and the inner race is composed of two sections (26, 27) which are likewise held pressed against one another under axial pretension.

13. Hub according to one of the preceding claims, wherein the outer surface of the connection bush (18) defines a cross-section in the shape of an essentially equilateral triangle (14).

## Patentansprüche

1. Nabenanordnung für ein angetriebenes Fahrzeugrad, mit einer Lagereinheit (1), mit einem inneren Kugelring (6) und einer homokinetischen Kupplung (2), die mit dem inneren Kugelring (6) mittels eines gesonderten Verbindungsstückes (18) und eines an dem Verbindungsstück (18) anliegendem Vorspannmitteles (22, 24, 41) zusammenwirkt, um die Lagereinheit (1) und die Kupplung (2) in engen Kontakt miteinander zu halten, dadurch gekennzeichnet, daß die Verbindung eine Verbindungshülse (18, 29) umfaßt, an der Vorspannmittel (22, 24, 41) anliegen, wobei die Verbindungshülse (18, 29) mit dem inneren Kugelring (6) und der Kupplung (2) mittels nicht kreisförmiger Formen zusammenwirkt.

2. Nabe nach Anspruch 1, wobei die Verbindung einen nach außen gerichteten Flansch (19, 32) aufweist, der an einer von der Lagereinheit (1) abgewandten Berührungsfläche der Kupplung (2) anliegt, wobei Vorspannmittel vorgesehen sind, die mit der Verbindungshülse (18, 29) mittels des Flansches (19, 32) zusammenwirken, um die Lagereinheit (1) und Kupplung (2) unter axialer Vorspannung gegeneinander verpreßt zu halten.

3. Nabe nach Anspruch 1 oder 2, wobei in axialer Richtung innerer Kugelring (6) und Kupplung (2) gegeneinander mittels der Verbindungshülse (18, 29) und mittels eines an dieser anliegenden Bolzens (22) verspannt gehalten werden.

4. Nabe nach Anspruch 1, 2 oder 3, wobei der Kopf (23) des Bolzens (22) an einer Kontaktfläche der Lagereinheit (1) anliegt, die von der Kupplung (2) weggerichtet angeordnet ist, und der Schaft des Bolzens (22) in eine Mutter eingeschraubt ist, die mit der Verbindungshülse (18, 29) zusammenwirkt.

5. Habe nach Anspruch 4, wobei die Mutter (3) einstückig mit der Verbindungshülse (29) ausgebildet ist.

6. Nabe nach Anspruch 4, wobei die Mutter (21) in der Verbindungshülse (18) angeordnet ist und an einem nach innen gerichteten Flansch (20) der Verbindungshülse (18) anliegt.

7. Nabe nach Anspruch 6, wobei ein Kompressionskörper (41) aus einem nachgiebigen Material, wie Gummi, zwischen der Mutter (21) und dem nach innen gerichteten Flansch (20) der Verbindungshülse (18) angeordnet ist.

8. Nabe nach Anspruch 4, 5, 6 oder 7, wobei der Kopf (23) des Bolzens (22) an einer Unterlegscheibe (24) anliegt, die auf einer Schulter in der Bohrung des inneren Kugelringes (6), in der Bolzen (22) aufgenommen ist, aufliegt.

9. Nabe nach Anspruch 4, 5, 6, oder 7, wobei der Kopf (23) des Bolzens (22) an einer Achskappe (28, 36) anliegt, die an dem inneren Kugelring (6) anliegt.

10. Nabe nach Anspruch 9, wobei die Achskappe (28, 36) einen vertieften Bereich (37) aufweist, der in die Bohrung paßt und der in Kontakt mit dem Bolzenkopf ist.

11. Nabe nach Anspruch 10, wobei die Bohrung einen konisch sich erweiternden Bereich aufweist, und der vertiefte Bereich (37) der Achskappe (36) eine entsprechende konische Form aufweist.

12. Nabe nach einem der Ansprüche 2 bis 11, wobei die Lagereinheit (1) ein Kugellager mit zwei Kugelreihen (7) ist, und der innere Kugelring aus zwei Abschnitten (26, 27) besteht, die genauso gegeneinander unter axialer Vorspannung gehalten werden.

13. Nabe nach einem der vorhergehenden Ansprüche, wobei die äußere Oberfläche der Verbindungshülse (18) einen Querschnitt aufweist, der im wesentlichen die Form eines im wesentlichen gleichschenkligen Dreiecks (14) hat.

## Revendications

1. Unité de moyeu de roue pour une roue motrice d'un véhicule, lequel moyeu comprend un ensemble de palier (1), équipé d'un chemin de roulement à billes intérieur rotatif (6) et d'un accouplement homocinétique (2) coopérant avec le chemin de roulement à billes intérieur (6) au moyen d'une pièce de raccordement séparée (18), et des moyens de précontrainte (22, 24, 41) en prise avec ladite pièce de raccordement (18) pour maintenir l'ensemble de palier (1) et l'accouplement (2) pressés l'un contre l'autre, caractérisé en ce que le raccordement comprend une douille de raccordement (18, 29) sur laquelle viennent en prise les moyens de précontrainte (22, 24, 41), laquelle douille de raccordement (18, 29) agit réciproquement avec le chemin de roulement à billes intérieur (6) et l'accouplement (2), au moyen de formes non circulaires.

2. Moyeu de roue selon la revendication 1, dans lequel le raccordement comporte une bride (19, 32) faisant face vers l'extérieur, qui est en contact avec une face de contact de l'accouplement (2), qui est orientée en direction opposée à l'ensemble de palier (1), et dans lequel les moyens de précontrainte qui agissent réciproquement avec la douille de raccordement (18, 29) sont prévus pour maintenir l'ensemble de palier (1) et l'accouplement (2) pressés l'un contre l'autre par l'intermédiaire de ladite bride (19, 32) sous précontrainte axiale.

3. Moyeu de roue selon la revendication 1 ou 2, dans lequel dans la direction axiale, le chemin de roulement à billes intérieur (6) et l'accouplement (2) sont maintenus serrés l'un contre l'autre au moyen de la douille de raccordement (18, 29) et d'une vis (22) qui porte contre cette dernière.

4. Moyeu de roue selon la revendication 1, 2 ou 3, dans lequel la tête (23) de la vis (22) est en contact avec une face de contact de l'ensemble de palier (1) qui est orientée en direction opposée à l'accouplement (2) et dans lequel la tige de la vis (22) est vissée dans un écrou qui agit réciproquement avec la douille de raccordement (18, 29).

5. Moyeu de roue selon la revendication 4, dans lequel l'écrou est d'un seul tenant avec la douille de raccordement (18, 29).

6. Moyeu de roue selon la revendication 4 ou 5, dans lequel l'écrou (21) est logé dans la douille de raccordement (18) et porte contre une bride (20) faisant face vers l'intérieur de la douille de raccordement (18).

7. Moyeu de roue selon la revendication 6, dans lequel un corps (41) travaillant à la compression, en une matière élastique, telle que du caoutchouc, est prévu entre l'écrou (21) et la bride (20), faisant face vers l'intérieur, de la douille de raccordement (18).

8. Moyeu de roue selon la revendication 4, 5, 6 ou 7, dans lequel la tête (23) de la vis (22) est en contact avec une rondelle (24) qui porte contre un épaulement dans l'alésage dans le chemin de roulement intérieur (6) dans lequel la vis (22) est logée.

9. Moyeu de roue selon la revendication 4, 5, 6 ou 7, dans lequel la tête (23) de la vis (22) est en contact avec une boîte d'essieu (28, 36) qui porte contre le chemin de roulement à billes intérieur (6).

10. Moyeu de roue selon la revendication 9, dans lequel la boîte d'essieu (28, 36) a une section plus profonde (37) qui s'ajuste dans l'alésage et avec laquelle la tête de vis est en contact.

11. Moyeu de roue selon la revendication 10, dans lequel l'alésage présente une section s'élargissant de façon conique, et dans lequel la section plus profonde (37) de la boîte d'essieu (36) est d'une conception conique correspondante.

12. Moyeu de roue selon l'une quelconque des revendications 2 à 11, dans lequel l'ensemble de palier (1) est un palier à billes ayant deux rangées de billes (7) et le chemin de roulement intérieur est composé de deux sections (26, 27) qui sont, de même, maintenues pressées l'une contre l'autre sous précontrainte axiale.

13. Moyeu de roue selon l'une quelconque des revendications précédentes, dans lequel la surface extérieure de la douille de raccordement (18) définit une section transversale de la forme d'un triangle (14) pratiquement équilatéral.
